# EUROPEAN PATENT SPECIFICATION

(11) **EP 3 639 395 B1**
(45) Date of publication and mention of the grant of the patent: **16.06.2021**
(21) Application number: 17916835.6
(22) Date of filing: 07.07.2017
(51) Int. Cl.: H04B 7/06, H04B 7/08

(54) **METHOD AND APPARATUS FOR RECEIVING BEAMFORMING**
VERFAHREN UND VORRICHTUNG FÜR EMPFANGSSTRAHLFORMUNG
PROCÉDÉ ET APPAREIL DE RÉCEPTION DE MISE EN FORME DE FAISCEAU

(43) Date of publication of application: 22.04.2020
(73) Proprietor: Telefonaktiebolaget LM Ericsson (publ), 164 83 Stockholm (SE)
(72) Inventor: LI, Ming, Beijing 100102 (CN); MIAO, Qingyu, Beijing 100102 (CN); WANG, Jianfeng, Beijing 100102 (CN)
(74) Representative: Ericsson
(86) International application number: PCT/CN2017/092224
(87) International publication number: WO 2019/006745

(56) References cited:
- CN-A- 106 033 989
- CN-A- 106 412 942
- CN-A- 106 471 759
- US-A1- 2014 105 317
- US-A1- 2016 142 922

## Description

### Technical Field

The present disclosure is generally directed to one or more methods for adaptive beamforming in a wireless network and one or more receivers thereof.

### Background

Multiple antenna technologies are widely employed to design modern wireless communication systems, especially the fifth generation (5G) communication systems, due to the high beamforming gain and multiplexing gain. The beamforming operation in multiple antenna communication systems can be performed at the transmitter side and/or the receiver side, which corresponds to the transmitting beamforming scheme and receiving beamforming scheme respectively, depending on the specific system implementation.

In a multiple antenna beamforming system, depending on the beamformer structures, the beamforming weights can be also performed to the received signals either in the digital domain or in the analog domain, which are corresponding to the digital beamforming and analog beamforming scheme respectively. For the digital beamforming, the digital beamforming vector or matrix derived from the channel state information (CSI) is exploited for the baseband digital signals from the multiple antennas, and therefore, the accuracy of channel estimation is critical for the performance of digital beamforming. For the analog beamforming, the beamforming weights are implemented via a set of phase shifters in the analog domain before the analog to digital converters (ADCs), and therefore antenna-specific ADCs can be avoided in the analog beamforming, thereby leading to a low-complexity receiver structure. However, either digital beamforming or analog beamforming would be more appropriate than the other for respective application scenarios.

US 2016/0142922 describes a transceiver architecture for multiple antennas systems that combines digital beamforming and analog/hybrid beamforming.

### Summary

As the digital beamforming and analog beamforming may be employed in different application scenarios in terms of implementation complexity and receiving performance, it is advantageous to design an adaptive beamforming receiver between the two beamforming schemes by taking the implementation complexity and system performance into considerations. It is an object of the present disclosure to resolve or alleviate at least one of the problems mentioned above.

According to one aspect of the disclosure, there is provided a method for a receiver communicating with a transmitter in wireless network. The method comprises a step of determining a wireless channel status, a step of selecting a beamforming scheme according to the determined wireless channel status, wherein the beamforming scheme being digital beamforming or analog beamforming, and a step of receiving data from the transmitter, according to the selected beamforming scheme.

According to the invention, there is provided a method for the receiver, in which the step of selecting the beamforming scheme according to the determined wireless channel status comprises a step of selecting an analog beamforming in response to the determined wireless channel status being coverage limited, and a step of selecting a digital beamforming in response to the determined wireless channel status being capacity limited.

According to a further aspect of the disclosure, there is provided a further method for the receiver, in which in response to the analog beamforming being selected, the method further comprises a step of determining the transmitter direction by performing a transmitter direction sweeping when the receiver is receiving control data in a physical control channel, and a step of determining the transmitter direction by exploiting a transmitter specific reference signals when the receiver is receiving traffic data in a physical shared channel.

According to a further aspect of the disclosure, there is provided a further method for the receiver, in which the step of determining the wireless channel status comprises a step of determining the wireless channel status as coverage limited in response to a Signal to Noise Ratio (SNR) being lower than a first threshold, and a step of determining the wireless channel status as capacity limited in response to a Signal to Interference Ratio (SIR) being lower than a second threshold.

According to another aspect of the disclosure, there is provided a receiver in a wireless network. The receiver comprises a memory storing processor-executable instructions, and a processing system comprising one or more processors configured to execute the processor-executable instructions, causing the receiver to perform the steps of any one of the above methods.

According to another aspect of the disclosure, there is provided a computer readable storage medium, which store instructions which, when run on a processing system of a receiver in a wireless network, cause the receiver to perform the steps of any one of the above methods.

### Brief Description of the Drawings

Exemplary features of the present invention are set forth in the appended claims. However, the present invention, its implementation mode, other objectives, features and advantages will be better understood through reading the following detailed description on the exemplary embodiments with reference to the accompanying drawings, where in the drawings:
Fig. 1 schematically illustrates an exemplary flow diagram for a method in a receiver performing adaptive beamforming in a wireless network according to one or more embodiments of the present invention;
Fig. 2 schematically illustrates a block diagram of a receiver according to one or more embodiments of the present invention;
Fig. 3 schematically illustrates a block diagram of a receiver according to one or more embodiments of the present invention;
Fig. 4 schematically illustrates a hardware structure of a receiver according to one or more embodiments of the present invention;
Fig. 5 schematically illustrates another hardware structure of a receiver according to one or more embodiments of the present invention;
Fig. 6 schematically illustrates a hardware structure of a signal distribution circuitry 320, 420 or 520 in a receiver according to one or more embodiments of the present invention; and
Fig. 7 schematically illustrates another hardware structure of a signal distribution circuitry 320, 420 or 520 in a receiver according to one or more embodiments of the present invention.

### Detailed Description of Embodiments

Embodiments herein will be described in detail hereinafter with reference to the accompanying drawings, in which embodiments are shown. These embodiments herein may, however, be embodied in many different forms and should not be construed as being limited to the embodiments set forth herein. The elements of the drawings are not necessarily to scale relative to each other. Like numbers refer to like elements throughout.

The terminology used herein is for the purpose of describing particular embodiments only and is not intended to be limiting. As used herein, the singular forms "a", "an" and "the" are intended to include the plural forms as well, unless the context clearly indicates otherwise. It will be further understood that the terms "comprises" "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meanings as commonly understood. It will be further understood that a term used herein should be interpreted as having a meaning consistent with its meaning in the context of this specification and the relevant art and will not be interpreted in an idealized or overly formal sense unless expressly so defined herein.

The present disclosure is described below with reference to block diagrams and/or flowchart illustrations of methods, nodes, devices and/or computer program products according to the present embodiments. It is understood that blocks of the block diagrams and/or flowchart illustrations, and combinations of blocks in the block diagrams and/or flowchart illustrations, may be implemented by computer program instructions. These computer program instructions may be provided to a processor, controller or controlling unit of a general purpose computer, special purpose computer, and/or other programmable data processing apparatus to produce a machine, such that the instructions, which execute via the processor of the computer and/or other programmable data processing apparatus, create means for implementing the functions/acts specified in the block diagrams and/or flowchart block or blocks.

Accordingly, the present technology may be embodied in hardware and/or in software (including firmware, resident software, micro-code, etc.). Furthermore, the present technology may take the form of a computer program product on a computer-usable or computer-readable storage medium having computer-usable or computer-readable program code embodied in the medium for use by or in connection with an instruction execution system. In the context of this document, a computer-usable or computer-readable medium may be any medium that may contain, store, communicate, propagate, or transport the program for use by or in connection with the instruction execution system, apparatus, or device.

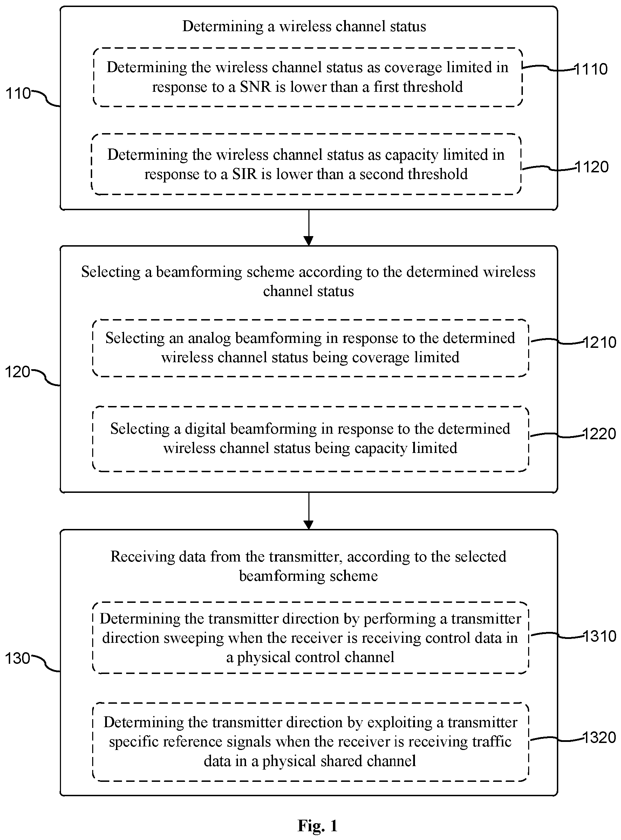

Fig. 1 schematically illustrates an exemplary flow diagram for a method in a receiver performing adaptive beamforming in a wireless network according to one or more embodiments of the present invention. It is assumed that the receiver in a wireless network is deployed with multiple antennas, and the receiving beamforming is performed in the receiver. It should be also mentioned that the transmitter may be deployed with single antenna or multiple antennas, which does not impose any restriction or limitation on the implementation of the methods discussed in this disclosure. Moreover, the receiver can perform a digital beamforming or an analog beamforming scheme, depending on the specific implementation and system requirement. Moreover, different beamforming schemes can achieve different advantages depending on the application scenarios and system requirements. For example, in the analog beamforming case, since all the received signals from the multiple receiving antennas are phase-shifted to be aligned in the phase domain of the analog signals, which will be further combined as a resulting combined signal. Therefore, the SNR of the combined signal will be enhanced, resulting in a higher beamforming gain or array gain in analog beamforming. Thus, it is desirable to leverage the analog beamforming scheme for a low SNR application scenario, for example. For another example, in the digital beamforming case, all the received signals from multiple antennas will be sampled and quantified by ADCs from the analog domain to the digital domain respectively, and the digital signals will then be processed by a digital beamforming vector or matrix in the digital baseband, which is a typical procedure of the digital beamforming scheme. It should be noted that the digital beamforming vector or matrix may be derived from the CSI in different ways, depending on specific digital beamforming implementations, such as Zero-Forcing (ZF) receiving, Least Square (LS) receiving, Linear Minimum Mean Square Error (LMMSE) receiving or Minimum Mean Square Error (MMSE) receiving. The CSI at the receiver may be obtained from a channel estimation process at the receiver or it can be obtained from the feedback of transmitter due to the channel reciprocity properties of Time Division Duplexing (TDD) systems. The multiplexing gain may be obtained in the digital beamforming scheme, since the received signals from the multiple antennas may originate from different data streams from the transmitter, thereby leading to a better capacity of the communication system. Therefore, for example, it is desirable to exploit the digital beamforming scheme in a capacity limited application scenario. Based on above discussions, an adaptive receiving scheme may be employed in a receiver between the digital beamforming and the analog beamforming, depending on different system requirements.

At step 110, the receiver determines a wireless channel status. As discussed above, the receiving beamforming scheme may be determined, depending on different application scenarios. It is appreciated for the skilled in the art that the wireless channel status may refer to the quality of wireless channel in a wireless network, which may be characterized by the transmitting power of the signal, the terminal noise level of the radio channel, the interference from other transmitters, the pre-processing of the transmitter, and the receiving performance of the receiver for example. It should be also noted that the wireless channel status may be also determined by the statistics of the communication results, such as the Hybrid Automatic Repeat reQuest (HARQ) statistics, since the quality of the wireless channel is related to the statistics communication results. It is desirable for the skilled in the art to employ different criterions to determine the wireless channel status, such as the SNR, SIR or statistics of the communication results, depending on different specific implementations.

For example, in a step 1110, the receiver determines the wireless channel status as coverage limited in response to the SNR being lower than a first threshold. In a typical coverage limited application scenario, the transmitter is relatively far away from the receiver, thereby the SNR at the receiver being lower than a predefined threshold. In an exemplary uplink transmission scenario, a coverage limited application scenario means that a transmitter, i.e., a wireless device is located at the edge of a cell, where the received signal from the transmitter is very weak at a receiver, i.e., an access node. Therefore, the receiver may determine the SNR and compare the determined SNR with a predefined first threshold to determine whether the wireless channel status is coverage limited.

For another example, in step 1120, the receiver determines the wireless channel status as capacity limited in response to the SIR being lower than a second threshold. For a typical capacity limited application scenario, the transmitter is interfered with other transmitters, for example in a high-density cellular networking scenario. In such capacity limited cases, although level of the signal from the transmitter to the receiver may be high at the receiver, the SIR for the received signal may be lower than a predefined second threshold, due to the heavy interference from other transmitters.

It should be mentioned that the determinations of the wireless channel status from the SNR or SIR are illustrated only for exemplary purpose. It is appreciated for the skilled in the art to employ different determination method for the wireless channel status, such as the statistics of communication results or a combination of the communication results and SNR or SIR. With the teaching and guidance in this disclosure, any modification, variation and alternation of the criterions determining the wireless channel status shall fall in the scope of this disclosure. For instance, in combined determining criteria for channel status determination, there may be a further threshold to a more precise result. For example, when SNR is lower than the first threshold and SIR is lower than the second threshold, a third threshold lower than the first threshold and a fourth threshold lower than the second threshold come in handy. When the SNR is lower than the third threshold while the SIR is higher than the fourth threshold, SNR is more eager to improve than SIR thus the channel status should be determined as coverage limited. And analog beamforming may be selected.

At step 120, the receiver selects a beamforming scheme according to the determined wireless channel status, where the beamforming scheme may be digital beamforming or analog beamforming. As discussed, for example, the analog beamforming may be leveraged to improve the SNR of the received signal for a transmitter which is far away from the receiver, while the digital beamforming may be used to improve the system capacity for a high-interference application scenario, thereby achieving an adaptive receiving beamforming method between the analog beamforming and digital beamforming schemes for the receiver in the wireless network.

For example, in a step 1210, the receiver selects an analog beamforming in response to the determined wireless channel status being coverage limited. For another example, in a step 1220, the receiver selects a digital beamforming in response to the determined wireless channel status being capacity limited.

At step 130, the receiver receives data from the transmitter, according to the selected beamforming scheme. The data may be related to traffic data or control data. It should be mentioned the step 130 of receiving data from the transmitter may comprise one or more sub steps, depending on the specific system implementations. For instance, when an analog beamforming scheme is selected, the step 130 of receiving data form the transmitter may comprise a plurality of sub steps as follows. The direction of the transmitter may be first determined, and the phases of the received signals may be shifted according to the direction of the transmitter and thereafter combined as a combined signal, which will be further sampled as digital signals for further digital processing, such as demodulation and decoding. For another instance, when a digital beamforming scheme is selected, it might be unnecessary to determine the physical direction of the transmission. The step 130 of receiving from data from the transmitter may comprise sub steps of obtaining the digital beamforming vector or matrix at the receiver, performing digital beamforming by means of digital beamforming vector or matrix and performing other digital processing, such as demodulation and decoding, It should be noted that with the teaching of principles in present disclosure, the skilled in the art may employ different receiving steps, according to the specific system implementations, which will fall within the scope of the invention.

As discussed, for an analog beamforming scheme, it is necessary to determine the direction of the transmitter in order to perform a further combining operation for the analog signals. Therefore, in response to the analog beamforming being selected, the receiver may first determine the direction of the transmitter when receiving the data from the transmitter. If the receiver is receiving traffic data from physical shared channels, the receiver may exploit reference signals embedded within the physical shared channels, for example the Demodulation Reference Signals (DMRS) in uplink receiving scenarios. However, in downlink receiving scenarios, if the receiver is receiving control data from physical control channels, such as the Downlink Control Indicator (DCI) in Physical Downlink Control Channel (PDCCH), there are no available reference signals assisting in determining the direction of the transmitter. In such scenarios, the receiver may adopt sweeping operations to determine the direction of the transmitter. For an illustrating example for the sweeping operations, since the receiver knows the frequency resource grid of the control data from the transmitter, the receiver may extract the received signals of the transmitter from the frequency resource grid. In order to determine the direction of the transmitter, the receiver may change the phases of its multiple antennas to form different receiving beamforming patterns covering all the potential directions of the transmitter, and then receive the signals at the frequency resource grid with the different receiving beamforming patterns. The receiver may further determine the most possible direction of the transmitter, which for example may correspond to the highest level of the received signals or the highest energy accumulation of the received signals.

As discussed above, for example, when the receiver receiving data from the transmitter, in response to the analog beamforming being selected, among other sub steps, at sub step 1310, the receiver may further determine the transmitter direction by performing a transmitter direction sweeping when the receiver is receiving control data in a physical control channel. For another example, at sub step 1320, in response to the analog beamforming being selected, the receiver may determine the transmitter direction by exploiting a transmitter specific reference signals when the receiver is receiving traffic data in a physical shared channel.

It is noted that the aforementioned exemplary methods are performed at the receivers in a wireless network, and thus the methods can be implemented in an access node and/or a wireless device, depending on the transmission is uplink or downlink communication. For example, in an uplink application, the receiver may be an access node and the transmitter may be a user device, the physical control channel is any one of a Physical Random Access Channel (PRACH) or a Physical Uplink Control Channel (PUCCH) and the physical shared channel is a Physical Uplink Shared Channel (PUSCH). For another example, in a downlink application, the receiver may be a user device and the transmitter may be an access node, where the physical control channel is any one of a Physical Hybrid ARQ Indicator Channel (PHICH), a Physical Control Format Indicator Channel (PCFICH) or a PDCCH and the physical shared channel is a Physical Downlink Shared Channel (PDSCH).

In the present disclosure, a wireless device also known as a mobile terminal, wireless terminal and/or User Equipment (UE) is enabled to communicate wirelessly with an access node in a wireless communication network, sometimes also referred to as a cellular radio system. For instance, a wireless device may be, but is not limited to: mobile phone, smart phone, sensor device, meter, vehicle, household appliance, medical appliance, media player, camera, or any type of consumer electronic, for instance, but not limited to, television, radio, lighting arrangement, tablet computer, laptop, or Personal Computer (PC). The wireless device may be a portable, pocket-storable, hand-held, computer-comprised, or vehicle-mounted mobile device, enabled to communicate voice and/or data, via a wireless or wired connection.

Typically, an access node may serve or cover one or several cells of the wireless communication system. That is, the access node provides radio coverage in the cell(s) and communicates over an air interface with wireless devices operating on radio frequencies within its range. The access node in some wireless communication systems may be also referred to as "eNB", "eNodeB", "NodeB", "B node" or ""gNB" for example, depending on the technology and terminology used. In the present disclosure, the access node may also be referred to as a Base Station (BS). The access node may be of different classes such as e.g. macro eNodeB, home eNodeB or pico base station, or relay node in heterogeneous or homogeneous networks, based on transmission power and thereby also cell size.

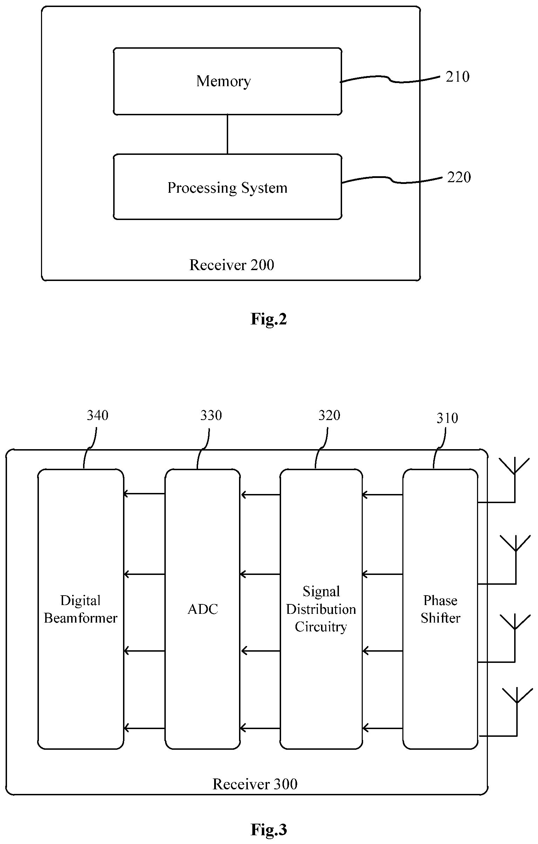

Fig. 2 schematically illustrates a block diagram of a receiver according to one or more embodiments of the present invention.

The receiver 200 may for example correspond to the receiver described in connection with Fig. 1. The receiver 200 comprises a memory 210 storing instructions and a processing system 220 configured to execute the instructions performing the steps of the method illustrated in Fig. 1. For example, the processing system which includes one or more microprocessor or microcontrollers, as well as other digital hardware, which may include Digital Signal Processors (DSP), special-purpose digital logic, and the like. The processors may be configured to execute program code stored in memory. Instructions stored in memory includes program codes for executing one or more telecommunications and/or data communications protocols as well as program codes for carrying out one or more of the techniques described herein, in several embodiments. For example, the memory may include a Read Only Memory (ROM), e.g., a flash ROM, a Random Access Memory (RAM), e.g., a Dynamic RAM (DRAM) or Static RAM (SRAM), a mass storage, e.g., a hard disk or solid state disk, or the like. The memory includes suitably configured program code to be executed by the processing system so as to implement the above-described functionalities of the receiver. In particular, the memory may include various program code modules for causing the receiver to perform processes as described above, e.g., corresponding to the method steps of any one of Fig. 1. The receiver may also comprise at least one interface (not shown) for communicating with the transmitter, e.g. a wireless interface, and/or for communicating with the neighboring receivers, e.g. a wired or wireless interface. The interface could be coupled to the processing system. Information and data as described above in connection with the methods may be sent via the interface.

The present disclosure may also be embodied in the computer program product which comprises all features capable of implementing the method as depicted herein and may implement the method when loaded to the computer system. A set of software modules may correspond to a set of respective steps or actions in any method described in conjunction with Fig. 1, and it is appreciated for the person skilled in the art that the aforementioned modules could be implemented via Programmable Logic Device (PLD), Field Programmable Gate Array (FPGA), Application Specific Integrated Circuit (ASIC), and other implement mechanisms as software products, application specific firmware, hardware products and a combination thereof.

Fig. 3 schematically illustrates another block diagram of a receiver according to one or more embodiments of the present invention. For a typical receiver, the signal receiving structure can be logically divided into two parts, i.e., the Radio Unit (RU) substantially for analog signal processing, such as signal mixing, phase shifting and ADC processing, and the Digital Unit (DU) substantially for digital signal processing, such as channel estimation, demodulation and decoding for different logical channels, and other logical determinations. Since different beamforming schemes have different hardware requirements. Therefore, in order to efficiently implement an adaptive beamforming scheme between the digital beamforming and analog beamforming in the receiver, it is desirable to reduce the complexity of the receiver hardware. To address these issues, a plurality of hardware implementations of the receiver are presented in this disclosure, as detailed in the following parts.

As illustrated, the receiver 300 can achieve an adaptive beamforming in a wireless network. The receiver 300 comprises a set of phase shifters 310, which are operable to shift a plurality of phases of a respective first plurality of signals, and the first plurality of signals are generated from a plurality of received signals from antennas. For example, the first plurality of signals may be the plurality of received signals from the antenna, where the outputs of the antenna are directly connected to the set of the phase shifters. For another example, the plurality of received signals from antennas may be processed by other components, such as a set of amplitude modifiers to form the respective first plurality of signals at the inputs of the set of phase shifter. The receiver 300 further comprises a signal distribution circuitry 320, which is operable to distribute the phase-shifted first plurality of signals as a plurality of output signals for digital beamforming or a combined output signal, and a set of ADCs 330, which are operable to convert a second plurality of signals or a second signal, the second plurality of signals being generated from the plurality of output signals for digital beamforming, and the second signal being generated from the combined output signal. The receiver 300 further comprises a digital beamformer 340, which is operable to perform digital beamforming for the converted second plurality of signals.

It should be mentioned that the combined output signal at the output of the signal distribution circuitry 320 is the resulting signal for analog beamforming, which will be sampled and quantified in ADCs and then fed to the baseband processing. And the plurality of output signals at the output of the signal distribution circuitry 320 will be first converted into digital signals and then processed in the digital beamformer 340 for digital beamforming processing. As aforementioned, the digital beamformer 340 can be implemented by means of different digital beamforming algorithms such as ZF, LS, MMSE and LMMSE. Therefore, the receiver 300 can implement the adaptive beamforming between digital and analog beamforming schemes. It should be also noted that the plurality of received signals from antennas may be also processed by a set of Low Noise 16 Amplifiers (LNAs), which is not shown in Fig. 3.

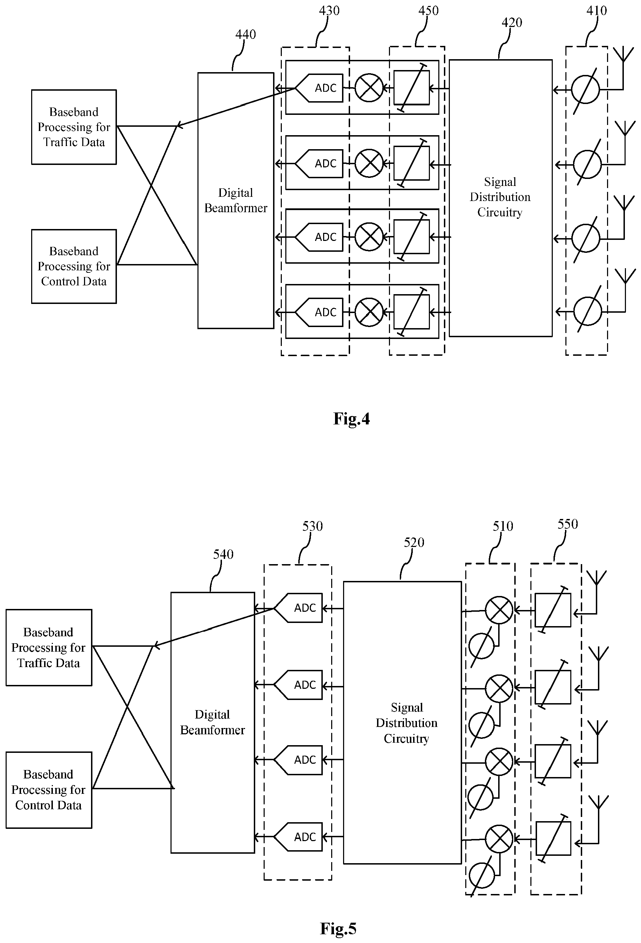

Fig. 4 schematically illustrates a hardware structure of a receiver according to one or more embodiments of the present invention. In addition to a set of phase shifters 410, a signal distribution circuitry 420, a set of ADCs 430, a digital beamformer 440, the receiver may further comprise a set of amplitude modifiers 450, which are operable to amplify the plurality of output signals or the combined output signal of the signal distribution circuitry 420 to generate the second plurality of signals or the second signal. Moreover, in this implementation, the first plurality of signals are the plurality of received signals from antennas, which means the set of phase shifters 410 are connected to the plurality of antennas directly.

In Fig. 4, it is illustrated that the outputs of ADC 430 may be fed to the digital beamformer 440 for further digital beamforming processing prior to the baseband processing, when the digital beamforming is selected. On the other hand, when analog beamforming is selected, only the first output of the ADC 430 may be directly fed to the parts of baseband processing, since in this case the operations of analog beamforming have been performed in the phase shifter 410 and the signal distribution circuitry 420.

Fig. 5 schematically illustrates another hardware structure of a receiver according to one or more embodiments of the present invention. In addition to a set of phase shifters 510, a signal distribution circuitry 520, a set of ADCs 530, a digital beamformer 540, the receiver may further comprise a set of amplitude modifiers 550, which are operable to amplify the plurality of received signals from antennas to generate the first plurality of signals. In other words, the set of amplitude modifiers 550 signals process signals ahead of the signal distribution circuitry 520, while according to the one or more embodiments of Figure 4, the set of amplitude modifiers 450 signals process signals following the signal distribution circuitry 420. Moreover, in such case, the second plurality of signals or the second signal is the plurality of output signals or the combined output signal respectively, which means the set of ADCs 530 are connected with the output of signal distribution circuitry 520 directly. Similar illustration of the outputs of ADC 530 linked to the digital beamformer 540 and baseband processing can be found in Fig. 5.

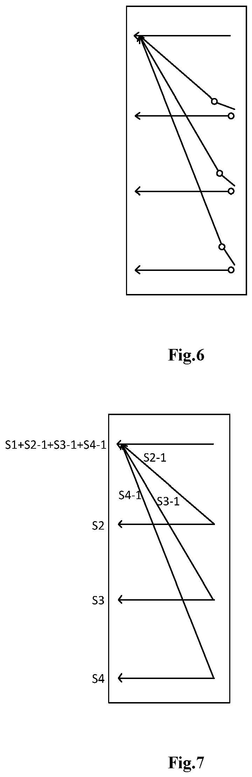

Fig. 6 schematically illustrates a hardware structure of a signal distribution circuitry 320, 420 or 520 in a receiver according to one or more embodiments of the present invention.

For illustration, it is assumed there are four branches in the signal distribution circuitry in Fig. 6. Generally, the signal distribution circuitry may comprise a plurality of input ports and a plurality of output ports, the plurality of input ports are connected to the respective plurality of output ports, all input ports in the plurality of input ports other than a first input port are further respectively connected to a first output port of the plurality of output ports with respective switches, when the switches being on, the signal distribution circuitry is operable to distribute the phase-shifted first plurality of signals as the combined output signal at the first output port, and when the switches being off, the signal distribution circuitry is operable to distribute the phase-shifted first plurality of signals as a plurality of output signals for digital beamforming. Therefore, the signal distribution circuitry in Fig. 6 can implement the adaption between the digital beamforming and the analog beamforming by switching off or switching on the plurality of switches, respectively.

Fig. 7 schematically illustrates another hardware structure of a signal distribution circuitry 320, 420 or 520 in a receiver according to one or more embodiments of the present invention.

For illustration, it is assumed there are four branches in the signal distribution circuitry in Fig. 7. In general, the signal distribution circuitry may comprise a plurality of input ports and a plurality of output ports, the plurality of input ports are connected to the respective plurality of output ports, and all input ports in the plurality of input ports are also respectively connected to a first output port of the plurality of output ports. The signal distribution circuitry is operable to distribute the phase-shifted first plurality of signals at the respective plurality of input ports as the combined output signal at the first output port or the plurality of output signals other than a first output signal at the respective plurality of output ports other than the first output port; and derive the first output signal, according to the combined output signal at the first output port and the plurality of output signals other than the first output signal at the respective plurality of output ports other than the first output port.

Provided that the analog beamforming is employed, the combined output signal of S1+S2-1+S3-1+S4-1 will be outputted from the signal distribution circuitry at the first output port, in which S*i*-1, *i*=2, 3 or 4 refers to the signal at the first output port with respect to the signal at the *i*th input port of the signal distribution circuitry and S*i*, *i*=2, 3 or 4 refers to the output signal at the *i*th output port with respect to the signal at the *i*th input port of the signal distribution circuitry. Since Si and S*i*-1, *i*=2, 3 or 4 are originated form the same input port, the relationship between S*i* and S*i*-1 can be determined by the connection property between the *i*th input port and *i*th output port and the connection property between the *i*th input port and first output port. Since the connection property between two ports in the signal distribution circuitry may be pre-determined by input and output signal testing and analysis, the relationship between S*i* and S*i*-1, *i*=2, 3 or 4 can be pre-obtained accordingly. By exploiting the relationship between S*i* and S*i*-1, *i*=2, 3 or 4, the first output signal S1 can be derived from the signals of S1+S2-1+S3-1+S4-1 at the first output port and S*i*, *i*=2, 3, and 4 at the *i*th output port of the signal distribution circuitry.

It should be also mentioned, there may further exist a beamforming control port (not shown) in the signal distribution circuitry in Fig. 4 or 5, through which the signal distribution circuitry could be instructed with the specific determined beamforming scheme from the parts of baseband processing in DU, such as the module of baseband processing for traffic data, and the module of baseband processing for control data in Fig. 4 or 5. The beamforming scheme may be determined by using any one of the aforementioned methods. For example, it is assumed that the downlink receiver, i.e., the wireless device is receiving control data, such the Downlink Control Information (DCI) in PDCCH from the transmitter, i.e., the access node, and it is further given that the wireless channel status is determined as coverage limited and thus the analog beamforming scheme is selected. In such scenario, the signal distribution circuitry in the receiver may be instructed with the analog beamforming scheme, for example through a beamforming forming control port in the signal distribution circuitry, and therefore the combined output signal will be outputted from the signal distribution circuitry. Moreover, the plurality of phase shifters are also instructed with the analog beamforming scheme, and the plurality of phase shifters will shift phases of a plurality of received signals to obtain a phase-aligned plurality of received signals, further resulting in the combined output signal from the signal distribution circuitry with an enhanced SNR. Therefore, as discussed above, the beamforming scheme selection may be performed in the parts of baseband processing, and phase shifter 310, 410, 510 and/or signal distribution circuitry 320, 420, 520 may be instructed with the the determination results causing the phase shifter and/or signal distribution circuitry to perform corresponding processes.

It should be also appreciated for the skilled in the art that depending on the specific system implementations, the steps, actions, or functions according to any one of the methods in Fig. 1 may be implemented in the parts of baseband processing in the receiver, while these steps, actions or functions may be also distributed into the parts of Fig. 3, 4 or 5, such as the phase shifters, the signal distribution circuitry and the ADC. For example, the signal distribution circuitry 320,420,520 further comprises other functional parts operable to determine whether the switches should be turned on or off, to control the switches and to execute an analog beamforming process when the switches are turned on.

It should be mentioned that with the teaching of the adaptive beamforming methods discussed herein, the skilled in the art may design other beamforming method to interact with the hardware of the receiver in Fig. 3, 4, or 5, by taking the specific application scenarios and system requirements into considerations. Moreover, it is appreciated for the skilled in the art that the specific adaptive beamforming method shall not be construed to restrict the scope of the receiver in Fig. 3, 4, or 5, which may be only depicted by its structural limitations in the accompanying claims.

In general, the various exemplary embodiments may be implemented in hardware or special purpose circuits, software, logical or any combination thereof. For example, some aspects may be implemented in hardware, while other aspects may be implemented in firmware or software which may be executed by a controller, microprocessor or other computing device, although the disclosure is not limited thereto. While various aspects of the exemplary embodiments of this disclosure may be illustrated and described as block and signaling diagrams, it is well understood that these blocks, apparatus, systems, techniques or methods described herein may be implemented in, as non-limiting examples, hardware, software, firmware, special purpose circuits or logical, general purpose hardware or controller or other computing devices, or some combination thereof.

The present disclosure has been specifically illustrated and explained with reference to the preferred embodiments. The skilled in the art should understand various changes thereto in form and details may be made without departing from the scope of the present disclosure.

## Claims

1. A method for a receiver communicating with a transmitter in wireless network, the method comprising:
- determining (110) a wireless channel status;
- selecting (120) a beamforming scheme according to the determined wireless channel status, wherein the beamforming scheme being digital beamforming or analog beamforming; and
- receiving (130) data from the transmitter, according to the selected beamforming scheme;
wherein the step of selecting (120) the beamforming scheme according to the determined wireless channel status comprising:
- selecting (1210) an analog beamforming in response to the determined wireless channel status being coverage limited; or
- selecting (1220) a digital beamforming in response to the determined wireless channel status being capacity limited.

2. The method according to claim 1, wherein in response to the analog beamforming being selected, the method further comprising:
- determining (1310) the transmitter direction by performing a transmitter direction sweeping when the receiver is receiving control data in a physical control channel; or
- determining (1320) the transmitter direction by exploiting a transmitter specific reference signals when the receiver is receiving traffic data in a physical shared channel.

3. The method acceding to claim 2, wherein the receiver is an access node and the transmitter is a user device, the physical control channel is any one of a Physical Random Access Channel, PRACH or a Physical Uplink Control Channel, PUCCH and the physical shared channel is a Physical Uplink Shared Channel, PUSCH.

4. The method acceding to claim 2, wherein the receiver is a user device and the transmitter is an access node, the physical control channel is any one of a Physical Hybrid ARQ Indicator Channel, PHICH, a Physical Control Format Indicator Channel, PCFICH or a Physical Downlink Control Channel, PDCCH and the physical shared channel is a Physical Downlink Shared Channel, PDSCH.

5. The method according to any one of the preceding claims, wherein the step of determining (110) the wireless channel status comprising:
- determining (1110) the wireless channel status as coverage limited in response to a Signal to Noise Ratio, SNR being lower than a first threshold; or
- determining (1120) the wireless channel status as capacity limited in response to a Signal to Interference Ratio, SIR being lower than a second threshold.

6. A receiver (200) for use in a wireless network, the receiver comprising:
- a memory (210) storing processor-executable instructions; and
- a processing system (220) comprising one or more processors configured to execute the processor-executable instructions, causing the receiver to perform the steps of the method according to any one of claims 1-5.

7. A computer readable storage medium, which store instructions which, when run on a processing system of a receiver in a wireless network, cause the receiver to perform the steps of the method according to any one of claims 1-5.

## Patentansprüche

1. Verfahren für einen Empfänger, der mit einem Sender in einem drahtlosen Netzwerk kommuniziert, wobei das Verfahren umfasst:
- Bestimmen (110) eines Drahtloskanalstatus;
- Auswählen (120) eines Strahlformungsschemas gemäß dem bestimmten Drahtloskanalstatus, wobei das Strahlformungsschema digitale Strahlformung oder analoge Strahlformung ist; and
- Empfangen (130) von Daten vom Sender gemäß dem ausgewählten Strahlformungsschema;
wobei der Schritt des Auswählen (120) des Strahlformungsschemas gemäß dem bestimmten Drahtloskanalstatus umfasst:
- Auswählen (1210) einer analogen Strahlformung in Reaktion darauf, dass der bestimmte Drahtloskanalstatus reichweitenbeschränkt ist; oder
- Auswählen (1220) einer digitalen Strahlformung in Reaktion darauf, dass der bestimmte Drahtloskanalstatus kapazitätsbeschränkt ist.

2. Verfahren nach Anspruch 1, wobei das Verfahren in Reaktion auf ein Auswählen der analogen Strahlformung ferner umfasst:
- Bestimmen (1310) der Senderrichtung durch Durchführen einer Senderrichtungsabtastung, wenn der Empfänger Steuerdaten in einem physikalischen Steuerkanal empfängt; oder
- Bestimmen (1320) der Senderrichtung durch Nutzen von senderspezifischen Referenzsignalen, wenn der Empfänger Verkehrsdaten in einem gemeinsamen physikalischen Kanal empfängt.

3. Verfahren nach Anspruch 2, wobei der Empfänger ein Zugangsknoten ist, und der Sender eine Benutzervorrichtung ist, der physikalische Steuerkanal einer von einem physikalischen Direktzugriffskanal, PRACH, oder einem physikalischen Uplink-Steuerkanal, PUCCH, ist, und der gemeinsame physikalische Kanal ein gemeinsamer physikalischer Uplink-Kanal, PUSCH, ist.

4. Verfahren nach Anspruch 2, wobei der Empfänger eine Benutzervorrichtung ist, und der Sender ein Zugangsknoten ist, der physikalische Steuerkanal einer von einem physikalischen Hybrid-ARQ-Anzeigekanal, PHICH, einem physikalischen Steuerformatanzeigekanal, PCFICH, oder einem physikalischen Downlink-Steuerkanal, PDCCH, ist, und der gemeinsame physikalische Kanal ein gemeinsamer physikalischer Downlink-Kanal, PDSCH, ist.

5. Verfahren nach einem der die vorhergehenden Ansprüche, wobei der Schritt des Bestimmens (110) des Drahtloskanalstatus umfasst:
- Bestimmen (1110) des Drahtloskanalstatus als reichweitenbeschränkt in Reaktion darauf, das ein Signal-zu-Rausch-Verhältnis, SNR, unter einer ersten Schwelle liegt; oder
- Bestimmen (1120) des Drahtloskanalstatus als kapazitätsbeschränkt in Reaktion darauf, das ein Signal-zu-Rausch-Verhältnis, SIR, unter einer zweiten Schwelle liegt.

6. Empfänger (200) zur Verwendung in einem drahtlosen Netzwerk, wobei der Empfänger umfasst:
- einen Speicher (210), der prozessorausführbare Anweisungen speichert; und
- ein Verarbeitungssystem (220), das einen oder mehrere Prozessoren umfasst, die so konfiguriert sind, dass sie die prozessorausführbaren Anweisungen ausführen, um den Empfänger zum Ausführen der Schritte des Verfahrens nach einem der Ansprüche 1 bis 5 zu veranlassen.

7. Computerlesbares Speichermedium, das Anweisungen speichert, die bei Ausführung auf einem Verarbeitungssystem eines Empfängers in einem drahtlosen Netzwerk den Empfänger zum Ausführen der Schritte des Verfahrens nach einem Ansprüche 1 bis 5 veranlassen.

## Revendications

1. Procédé pour un récepteur communiquant avec un émetteur dans un réseau sans fil, le procédé comprenant :
- la détermination (110) d'un statut de canal sans fil ;
- la sélection (120) d'un schéma de formation de faisceau en fonction du statut de canal sans fil déterminé, dans lequel le schéma de formation de faisceau est une formation de faisceau numérique ou une formation de faisceau analogique ; et
- la réception (130) de données depuis l'émetteur en fonction du schéma de formation de faisceau sélectionné ;
dans lequel l'étape de la sélection (120) du schéma de formation de faisceau en fonction du statut de canal sans fil déterminé comprend :
- la sélection (1210) d'une formation de faisceau analogique en réponse au fait que le statut de canal sans fil déterminé est une couverture limitée ; ou
- la sélection (1220) d'une formation de faisceau numérique en réponse au fait que le statut de canal sans fil déterminé est une capacité limitée.

2. Procédé selon la revendication 1, dans lequel, en réponse à la sélection de la formation de faisceau analogique, le procédé comprend en outre :
- la détermination (1310) de la direction d'émetteur par la réalisation d'un balayage de direction d'émetteur lorsque le récepteur reçoit des données de commande dans un canal de commande physique ; ou
- la détermination (1320) de la direction d'émetteur par l'exploitation de signaux de référence spécifiques à l'émetteur lorsque le récepteur reçoit des données de trafic dans un canal partagé physique.

3. Procédé selon la revendication 2, dans lequel le récepteur est un nœud d'accès et l'émetteur est un dispositif d'utilisateur, le canal de commande physique est l'un quelconque parmi un canal d'accès aléatoire physique, PRACH, ou un canal de commande de liaison montante physique, PUCCH, et le canal partagé physique est un canal partagé de liaison montante physique, PUSCH.

4. Procédé selon la revendication 2, dans lequel le récepteur est un dispositif d'utilisateur et l'émetteur est un nœud d'accès, le canal de commande physique est l'un quelconque parmi un canal d'indicateur ARQ hybride physique, PHICH, un canal d'indicateur de format de commande physique, PCFICH, ou un canal de commande de liaison descendante physique, PDCCH, et le canal partagé physique est un canal partagé de liaison descendante physique, PDSCH.

5. Procédé selon l'une quelconque des revendications précédentes, dans lequel l'étape de la détermination (110) du statut de canal sans fil comprend :
- la détermination (1110) du statut de canal sans fil en tant que couverture limitée en réponse à un rapport de signal sur bruit, SNR, qui est inférieur à un premier seuil ; ou
- la détermination (1120) du statut de canal sans fil en tant que capacité limitée en réponse à un rapport de signal sur interférence qui est inférieur à un deuxième seuil.

6. Récepteur (200) destiné à être utilisé dans un réseau sans fil, le récepteur comprenant :
- une mémoire (210) stockant des instructions exécutables par processeur ; et
- un système de traitement (220) comprenant un ou plusieurs processeurs configurés pour exécuter les instructions exécutables par processeur, amenant le récepteur à réaliser les étapes du procédé selon l'une quelconque des revendications 1 à 5.

7. Support de stockage lisible par ordinateur, stockant des instructions qui, lorsqu'elles sont exécutées sur un système de traitement d'un récepteur dans un réseau sans fil, amènent le récepteur à réaliser les étapes du procédé selon l'une quelconque des revendications 1 à 5.
